# EUROPEAN PATENT APPLICATION

(11) **EP 4 686 260 A1**
(43) Date of publication of application: **28.01.2026**
(21) Application number: 24809911.1
(22) Date of filing: 03.01.2024
(51) Int. Cl.: H04W 36/08

(54) **COMMUNICATION METHOD, COMMUNICATION APPARATUS, AND COMMUNICATION SYSTEM**

(30) Priority: 19.05.2023 CN 202310578093
(71) Applicant: Huawei Technologies Co., Ltd., Shenzhen, Guangdong 518129 (CN)
(72) Inventor: LI, Guanglei, Shenzhen, Guangdong 518129 (CN); ZONG, Zaifeng, Shenzhen, Guangdong 518129 (CN); LIAO, Ting, Shenzhen, Guangdong 518129 (CN)
(74) Representative: Gill Jennings & Every LLP
(86) International application number: PCT/CN2024/070300
(87) International publication number: WO 2024/239660

(57) **Abstract**

This application provides a communication method, a communication apparatus, and a communication system. In the method, in a scenario in which a satellite cannot be connected to a terminal device and a core network at the same time, a mobility management network element selects, for the terminal device based on a communication plan of the terminal device, a first satellite that provides a service, and sends an identifier of the first satellite to a session management network element; and the session management network element selects, for the terminal device based on the identifier of the first satellite, an on-board user plane network element that provides a service for the terminal device. This implements correct communication of the terminal device.

## Description

### CROSS-REFERENCE TO RELATED APPLICATIONS

This application claims priority to Chinese Patent Application No. 202310578093.5, filed with the China National Intellectual Property Administration on May 19, 2023 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of wireless communication technologies, and in particular, to a communication method, communication apparatus, and communication system.

### BACKGROUND

The 3rd generation partnership project (3rd generation partnership project, 3GPP) considers satellite-supported data processing, that is, considers that a satellite provides a non-transparent forwarding capability (or referred to as a regenerative capability). Therefore, an access network device may be deployed on the satellite, so that the satellite has a data processing capability.

Due to movement of a non-geostationary satellite like a medium earth orbit (medium earth orbit, MEO) satellite and a low earth orbit (low earth orbit, LEO) satellite relative to the ground, a single satellite, or a plurality of satellites without inter-satellite link networking cannot always provide signal coverage for the terminal device. As a result, discontinuous coverage occurs when the terminal device uses the satellite for access.

In a current discontinuous coverage scenario discussed by the 3GPP, by default, when a terminal device can be covered by a satellite, the satellite can also establish a connection to a ground core network by using a ground gateway station, that is, the satellite can establish connections to the terminal device and the core network at the same time.

However, in some other satellite discontinuous coverage scenarios, for example, a terminal device is located in an area like a sea surface, an isolated island, or a polar area, when the terminal device is covered by a satellite, the satellite in this case cannot establish a connection to a ground core network by using a ground gateway station, that is, the satellite cannot establish connections to the terminal device and the core network at the same time. In this scenario, how to implement correct communication of the terminal device needs to be resolved.

### SUMMARY

This application provides a communication method, a communication apparatus, and a communication system, to implement correct communication of a terminal device.

According to a first aspect, an embodiment of this application provides a communication method. The method may be performed by a mobility management network element or a module (for example, a chip) used in a mobility management network element. The method includes: determining, based on a communication plan of a terminal device, a first satellite expected to provide a communication service for the terminal device; and sending an identifier of the first satellite to a session management network element, where the communication plan includes an identifier of at least one satellite expected to be used; or the communication plan includes at least two groups of service information, the at least two groups of service information include a first group of service information and a second group of service information, the first group of service information includes first communication location information and first communication time information, the first communication location information indicates a first location at which the terminal device expects to use satellite communication, the first communication time information indicates first time in which the terminal device expects to use satellite communication at the first location, the second group of service information includes second communication location information and second communication time information, the second communication location information indicates a second location at which the terminal device expects to use satellite communication, the second communication time information indicates second time at which the terminal device expects to use satellite communication at the second location, and the second time is different from the first time.

In the foregoing solution, in a scenario in which a satellite cannot be connected to the terminal device and a core network at the same time, the mobility management network element selects, for the terminal device based on the communication plan of the terminal device, the first satellite that provides a service, and sends the identifier of the first satellite to the session management network element; and the session management network element selects, for the terminal device based on the identifier of the first satellite, an on-board user plane network element that provides a service for the terminal device. This implements correct communication of the terminal device.

In a possible implementation method, the first communication time information includes at least two of first start time, first communication duration, or first end time; and the second communication time information includes at least two of second start time, second communication duration, or second end time.

In a possible implementation method, the first location is different from the second location.

In a possible implementation method, when the communication plan includes the identifier of the at least one satellite expected to be used, the communication plan further includes communication time information separately corresponding to the at least one satellite expected to be used, and communication time information corresponding to the first satellite indicates time in which the terminal device expects to use the first satellite for communication.

In the foregoing solution, the communication time information is included in the communication plan, so that a satellite that provides a service for the terminal device can be more accurately selected.

In a possible implementation method, the method further includes: receiving the communication plan from the terminal device, a ground application server, or a network management device.

In a possible implementation method, the method further includes: sending an access stratum context of the terminal device to the first satellite, where the access stratum context is used to establish a connection between the first satellite and the terminal device.

In the foregoing solution, the context of the terminal device is sent to the first satellite, and therefore, the first satellite can quickly establish the connection to the terminal device based on the access stratum context, thereby improving communication efficiency.

In a possible implementation method, the method further includes: sending indication information to the session management network element, where the indication information is used to trigger selection of an on-board user plane network element that provides a service for the terminal device.

In the foregoing solution, the session management network element is triggered, in an explicit manner, to select the on-board user plane network element that provides the service for the terminal device, so that the session management network element is accurately notified of selecting the on-board user plane network element that provides the service for the terminal device.

In a possible implementation method, the method further includes: receiving store-and-forward subscription data of the terminal device from a unified data management network element, where the store-and-forward subscription data indicates that the terminal device has subscribed to a store-and-forward service; and sending the indication information to the session management network element includes: sending the indication information to the session management network element based on the store-and-forward subscription data.

In a possible implementation method, the method further includes: receiving a session establishment request from the terminal device and a DNN requested by the terminal device, where the session establishment request is used to request to establish a session, and a data network corresponding to the DNN is used to provide an on-satellite store-and-forward service; and sending the indication information to the session management network element includes: sending the indication information to the session management network element based on the DNN.

In a possible implementation method, the communication plan is determined based on satellite coverage information, feeder link information, and a communication requirement of the terminal device.

In a possible implementation method, the satellite coverage information includes coverage time and a coverage area, and the satellite coverage information indicates that the coverage area is covered by a satellite within the coverage time.

In a possible implementation method, the satellite coverage information includes coverage time, a coverage area, and an identifier of a satellite, and the satellite coverage information indicates that the coverage area is covered, within the coverage time, by the satellite indicated by the identifier of the satellite.

In a possible implementation method, the feeder link information includes an identifier of a satellite, and includes available time and/or an available area, and the feeder link information indicates that the satellite can establish a feeder link in the available time and/or the available area.

In a possible implementation method, the communication requirement of the terminal device includes but is not limited to at least one of the following information: time at which the terminal device uses a satellite communication service, a location at which the terminal device uses a satellite communication service, a delay requirement of a service of the terminal device, or a bandwidth requirement of a service of the terminal device.

According to a second aspect, an embodiment of this application provides a communication method. The method may be performed by a session management network element or a module (for example, a chip) used in a session management network element. The method includes: receiving session management subscription information of a first session of a terminal device from a unified data management network element, where the session management subscription information includes a DNN, and a data network corresponding to the DNN is used to provide an on-satellite store-and-forward service; and selecting an on-board user plane network element based on the DNN.

In the foregoing solution, the session management network element selects, based on the DNN, the on-board user plane network element that provides a service for the terminal device, and the on-board user plane network element provides a data forwarding service for the terminal device, thereby implementing correct communication of the terminal device.

In a possible implementation method, the session management subscription information further includes a store-and-forward indication, and the store-and-forward indication indicates that the data network corresponding to the DNN is used to provide the on-satellite store-and-forward service; and selecting the on-board user plane network element based on the DNN includes: selecting the on-board user plane network element based on the DNN and the store-and-forward indication.

In the foregoing solution, the session management network element is triggered, in an explicit manner, to select the on-board user plane network element that provides the service for the terminal device, so that the session management network element is accurately notified of selecting the on-board user plane network element that provides the service for the terminal device.

In a possible implementation method, the method further includes: receiving traffic description information from a ground application server; and sending a forwarding rule to the selected on-board user plane network element, where the forwarding rule is used by the on-board user plane network element to forward, to an on-board application server, an uplink service flow that matches the traffic description information.

In the foregoing solution, the forwarding rule is determined based on the traffic description information, and the forwarding rule is sent to the on-board user plane network element. The on-board user plane network element provides the data forwarding service for the terminal device according to the forwarding rule, thereby implementing correct communication of the terminal device.

In a possible implementation method, the traffic description information includes a DNAI; and the method further includes: selecting the on-board user plane network element based on the DNAI.

According to a third aspect, an embodiment of this application provides a communication method. The method may be performed by an on-board application server or a module (for example, a chip) used in an on-board application server. The method includes: receiving a downlink service flow of a terminal device from a ground application server; storing the downlink service flow; and sending the stored downlink service flow to the on-board user plane network element after an uplink service flow from the terminal device is received or within satellite communication time of the terminal device, where the satellite communication time indicates time at which the terminal device uses satellite communication.

In the foregoing solution, in a scenario in which a satellite cannot be connected to the terminal device and a core network at the same time, the on-board application server in a 3GPP external network stores and forwards the downlink service flow that needs to be sent to the terminal device, thereby implementing correct communication of the terminal device. In addition, because a 3GPP network does not need to store the downlink service flow, pressure of the 3GPP network can be reduced.

In a possible implementation method, the method further includes: receiving the satellite communication time of the terminal device.

In a possible implementation method, the satellite communication time information includes at least two of start time, communication duration, or end time.

According to a fourth aspect, an embodiment of this application provides a communication method. The method may be performed by an on-board application server or a module (for example, a chip) used in an on-board application server. The method includes: receiving an uplink service flow of a terminal device from an on-board user plane network element; storing the uplink service flow; and when the on-board application server successfully establishes a connection to a ground application server, sending the stored uplink service flow to the ground application server.

In the foregoing solution, in a scenario in which a satellite cannot be connected to the terminal device and a core network at the same time, the on-board application server in a 3GPP external network stores and forwards the uplink service flow that needs to be sent to the terminal device, thereby implementing correct communication of the terminal device. In addition, because a 3GPP network does not need to store the uplink service flow, pressure of the 3GPP network can be reduced.

In a possible implementation method, the method further includes: when the on-board application server successfully establishes the connection to the ground application server, receiving a downlink service flow of the terminal device from the ground application server; storing the downlink service flow; and sending the stored downlink service flow to the on-board user plane network element after an uplink service flow from the terminal device is received or within satellite communication time of the terminal device, where the satellite communication time indicates time at which the terminal device uses satellite communication.

In a possible implementation method, the method further includes: receiving the satellite communication time of the terminal device.

In a possible implementation method, the satellite communication time information includes at least two of start time, communication duration, or end time.

According to a fifth aspect, an embodiment of this application provides a communication method. The method may be performed by an on-board user plane network element or a module (for example, a chip) used in an on-board user plane network element. The method includes: receiving a forwarding rule from a session management network element, where the forwarding rule is used by the on-board user plane network element to forward an uplink service flow of a terminal device to an on-board application server; receiving the uplink service flow from the terminal device; and sending the uplink service flow of the terminal device to the on-board application server according to the forwarding rule.

In the foregoing solution, the on-board user plane network element provides a data forwarding service for the terminal device according to the forwarding rule, thereby implementing correct communication of the terminal device.

In a possible implementation method, the forwarding rule is further used by the on-board user plane network element to send a downlink service flow to the terminal device; and the method further includes: receiving the downlink service flow of the terminal device from the on-board application server; and sending the downlink service flow to the terminal device according to the forwarding rule.

According to a sixth aspect, an embodiment of this application provides a communication apparatus. The apparatus may be a mobility management network element, or may be a chip used in a mobility management network element. The apparatus has a function of implementing any implementation method of the first aspect. The function may be implemented by hardware, or may be implemented by hardware executing corresponding software. The hardware or the software includes one or more modules corresponding to the function.

According to a seventh aspect, an embodiment of this application provides a communication apparatus. The apparatus may be a session management network element, or may be a chip used in a session management network element. The apparatus has a function of implementing any implementation method of the second aspect. The function may be implemented by hardware, or may be implemented by hardware executing corresponding software. The hardware or the software includes one or more modules corresponding to the function.

According to an eighth aspect, an embodiment of this application provides a communication apparatus. The apparatus may be an on-board application server, or may be a chip used in an on-board application server. The apparatus has a function of implementing any implementation method of the third aspect and the fourth aspect. The function may be implemented by hardware, or may be implemented by hardware executing corresponding software. The hardware or the software includes one or more modules corresponding to the function.

According to a ninth aspect, an embodiment of this application provides a communication apparatus. The apparatus may be an on-board user plane network element, or may be a chip used in an on-board user plane network element. The apparatus has a function of implementing any implementation method of the fifth aspect. The function may be implemented by hardware, or may be implemented by hardware executing corresponding software. The hardware or the software includes one or more modules corresponding to the function.

According to a tenth aspect, an embodiment of this application provides a communication apparatus, including a processor coupled to a memory. The processor is configured to invoke a program stored in the memory, to perform any implementation method of the first aspect to the fifth aspect. The memory may be located inside or outside the apparatus. In addition, there may be one or more processors.

According to an eleventh aspect, an embodiment of this application provides a communication apparatus, including a processor and a memory. The memory is configured to store computer instructions. When the apparatus runs, the processor executes the computer instructions stored in the memory, to enable the apparatus to perform any implementation method of the first aspect to the fifth aspect.

According to a twelfth aspect, an embodiment of this application provides a communication apparatus, including units or means (means) for performing steps of any implementation method of the first aspect to the fifth aspect.

According to a thirteenth aspect, an embodiment of this application provides a communication apparatus, including a processor and an interface circuit. The processor is configured to: communicate with another apparatus through the interface circuit, and perform any implementation method of the first aspect to the fifth aspect. One or more processors are included.

According to a fourteenth aspect, an embodiment of this application further provides a computer-readable storage medium. The computer-readable storage medium stores instructions. When the instructions are run on a communication apparatus, any implementation method of the first aspect to the fifth aspect is performed.

According to a fifteenth aspect, an embodiment of this application further provides a computer program product. The computer program product includes a computer program or instructions. When the computer program or the instructions is/are run by a communication apparatus, any implementation method of the first aspect to the fifth aspect is performed.

According to a sixteenth aspect, an embodiment of this application further provides a chip system, including a processor, configured to perform any implementation method of the first aspect to the fifth aspect.

According to a seventeenth aspect, an embodiment of this application further provides a communication system, including a session management network element and a mobility management network element configured to perform any method of the first aspect. The session management network element is configured to receive an identifier of a first satellite.

According to an eighteenth aspect, an embodiment of this application further provides a communication system, including a unified data management network element and a session management network element configured to perform any method of the second aspect. The unified data management network element is configured to send session management subscription information of a first session of a terminal device to the session management network element.

According to a nineteenth aspect, an embodiment of this application further provides a communication system, including a ground application server and an on-board application server configured to perform any method of the third aspect. The ground application server is configured to send a downlink service flow of a terminal device to the on-board application server.

According to a twentieth aspect, an embodiment of this application further provides a communication system, including a ground application server and an on-board application server configured to perform any method of the fourth aspect. The ground application server is configured to receive an uplink service flow of a terminal device from the on-board application server.

### BRIEF DESCRIPTION OF DRAWINGS

FIG. 1 is a diagram of a 5G network architecture based on a service-oriented architecture;
FIG. 2(a) is a diagram of a satellite access scenario in which an on-board access network device is deployed on a satellite;
FIG. 2(b) is a diagram of a satellite access scenario in which an on-board access network device and an on-board UPF are deployed on a satellite;
FIG. 3 is a diagram of a satellite discontinuous coverage scenario;
FIG. 4(a) is a schematic flowchart of a communication method according to an embodiment of this application;
FIG. 4(b) is a schematic flowchart of a communication method according to an embodiment of this application;
FIG. 4(c) is a schematic flowchart of a communication method according to an embodiment of this application;
FIG. 5 is an example diagram of satellite communication;
FIG. 6A to FIG. 6C are a schematic flowchart of a communication method according to an embodiment of this application;
FIG. 7 is a diagram of a communication apparatus according to an embodiment of this application; and
FIG. 8 is a diagram of a communication apparatus according to an embodiment of this application.

### DESCRIPTION OF EMBODIMENTS

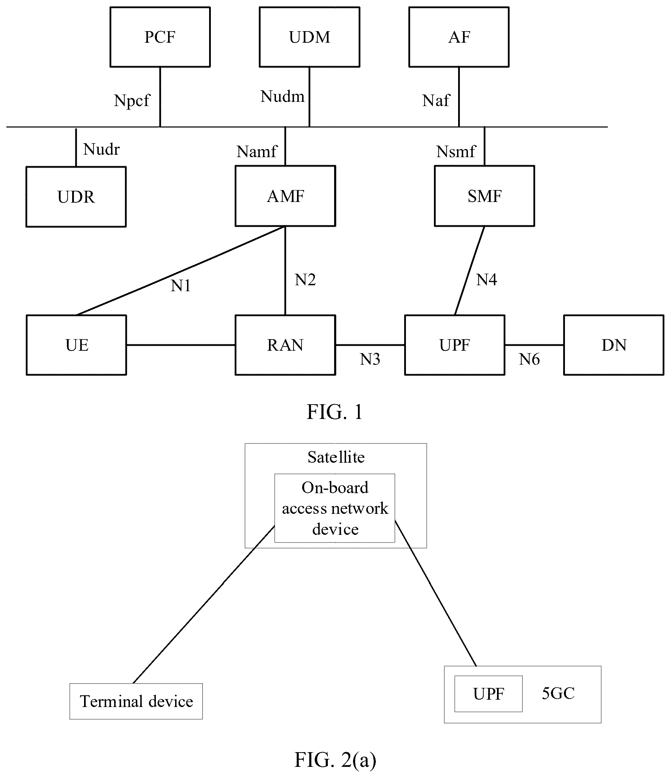

FIG. 1 is a diagram of a 5G network architecture based on a service-oriented architecture. The 5G network architecture shown in FIG. 1 includes a data network (data network, DN) and an operator network. Functions of some network elements in the network architecture are briefly described below.

The operator network includes one or more of the following network elements: an authentication server function (authentication server function, AUSF) network element (not shown in the figure), a unified data management (unified data management, UDM) network element, a unified data repository (unified data repository, UDR) network element, a network repository function (network repository function, NRF) network element (not shown in the figure), a network exposure function (network exposure function, NEF) network element (not shown in the figure), an application function (application function, AF) network element, a policy control function (policy control function, PCF) network element, an access and mobility management function (access and mobility management function, AMF) network element, a session management function (session management function, SMF) network element, a user plane function (user plane function, UPF) network element, an access network (access network, AN) device (a radio access network (radio access network, RAN) device is used as an example in the figure), and the like. In the operator network, a network element or device other than the access network device may be referred to as a core network element or a core network device.

The access network device includes a wired access network device and a radio access network device. The radio access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6th generation (6th generation, 6G) mobile communication system, a base station in a future mobile communication system, an access node in a wireless fidelity (wireless fidelity, Wi-Fi) system, or the like; or may be a module or a unit that completes some functions of a base station, for example, may be a central unit (central unit, CU), or may be a distributed unit (distributed unit, DU). The radio access network device may be a macro base station, may be a micro base station or an indoor base station, or may be a relay node, a donor node, or the like. A specific technology and a specific device form that are used by the access network device are not limited in embodiments of this application.

A terminal device communicating with the access network device includes a terminal, user equipment (user equipment, UE), a mobile station, a mobile terminal, and the like. In the figure, an example in which the terminal device is UE is used. The terminal device may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, autonomous driving, telemedicine, a smart grid, smart furniture, a smart office, smart wearable, smart transportation, and a smart city. The terminal device may be a mobile phone, a tablet computer, a computer with a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal device are not limited in embodiments of this application.

The access network device and the terminal device may be located in fixed locations, or may be movable. The access network device and the terminal device may be deployed on land, including an indoor device, an outdoor device, a handheld device, or a vehicle-mounted device; may be deployed on water; or may be deployed on an airplane, a balloon, and an artificial satellite in the air. Application scenarios of the access network device and the terminal device are not limited in embodiments of this application.

A mobility management network element is mainly used for attachment, mobility management, and tracking area update (tracking area update, TAU) procedures of a terminal device in a mobile network. An access management network element terminates a non-access stratum (non-access stratum, NAS) message, completes registration management, connection management, reachability management, and mobility management, allocates a tracking area list (tracking area list, TA list), and transparently routes a session management (session management, SM) message to a session management network element. In 5G, the mobility management network element may be the AMF network element. In future communication such as 6th generation (the 6th generation, 6G), the mobility management network element may still be the AMF network element, or may have another name. This is not limited in this application.

The session management network element is a control plane network element provided by the operator network, and is responsible for managing a protocol data unit (protocol data unit, PDU) session of the terminal device. The PDU session is a channel for PDU transmission, and the terminal device and the DN need to perform PDU transmission with each other through the PDU session. The SMF network element is responsible for establishment, maintenance, deletion, and the like of the PDU session. The session management network element includes session-related functions such as session management (for example, session establishment, modification, and release, including maintenance of a tunnel between a user plane network element and the access network device), selection and control of the user plane network element, service and session continuity (Service and Session Continuity, SSC) mode selection, and roaming. In 5G, the session management network element may be the SMF network element. In future communication such as 6G, the session management network element may still be the SMF network element, or may have another name. This is not limited in this application.

The user plane network element is a gateway provided by an operator, and is a gateway for communication between the operator network and the DN. The user plane network element includes functions related to a user plane, for example, data packet routing and transmission, packet detection, service usage reporting, quality of service (quality of service, QoS) processing, compliance testing, uplink packet detection, and downlink data packet storage. In 5G, the user plane network element may be the UPF network element. In future communication such as 6G, the user plane network element may still be the UPF network element, or may have another name. This is not limited in this application.

The data management network element is a control plane network element provided by the operator, and is responsible for storing information such as a subscription permanent identifier (subscription permanent identifier, SUPI), a credential (credential), a security context (security context), and subscription data of a subscriber in the operator network. The information stored in the data management network element may be used for authentication and authorization for accessing the operator network by the terminal device. The subscriber in the operator network may be specifically a user using a service provided by the operator network, for example, a user using a SIM card of China Telecom, or a user using a SIM card of China Mobile. The SUPI of the subscriber may be a number of the SIM card, or the like. The credential and the security context of the subscriber may be stored small files such as an encryption key of the SIM card or information related to encryption of the SIM card, and are used for authentication and/or authorization. The security context may be data (cookie), a token (token), or the like stored in a local terminal (for example, a mobile phone) of the user. The subscription data of the subscriber may be a supporting service of the SIM card, for example, a traffic package or a used network of the SIM card. It should be noted that the SUPI, the credential, the security context, the authentication data (cookie), and the token are equivalent to information related to authentication and authorization, and are not distinguished or limited in this application document for ease of description. Unless otherwise specified, the security context is used as an example for description in embodiments of this application. However, embodiments of this application are also applicable to authentication and/or authorization information described in another manner. In 5G, the data management network element may be the UDM network element. In future communication such as 6G, the data management network element may still be the UDM network element, or may have another name. This is not limited in this application.

The unified data repository network element is a control plane network element provided by the operator, and includes a function of accessing data of a type such as subscription data, policy data, and application data. In 5G, the unified data repository network element may be the UDR network element. In future communication such as 6G, the unified data repository network element may still be the UDR network element, or may have another name. This is not limited in this application.

The network exposure network element is a control plane network element provided by the operator. The network exposure network element securely exposes an external interface of the operator network to a third party. When the session management network element needs to communicate with a third-party network element, the network exposure network element may serve as a relay for communication between the session management network element and the third-party network element. When the network exposure network element serves as the relay, the network exposure network element may translate identifier information of a subscriber and identifier information of the third-party network element. For example, when sending the SUPI of the subscriber from the operator network to the third party, the network exposure network element may translate the SUPI into an external identity corresponding to the SUPI. On the contrary, when sending the external ID (a network element ID of the third party) to the operator network, the network exposure network element may translate the external ID into the SUPI. In 5G, the network exposure network element may be the NEF network element. In future communication such as 6G, the network exposure network element may still be the NEF network element, or may have another name. This is not limited in this application.

The application function network element is configured to transfer a requirement of an application side for a network side, for example, a quality of service (quality of service, QoS) requirement or a user status event subscription. The application function network element may be a third-party functional entity, or may be an application server deployed by the operator. In 5G, the application function network element may be the AF network element. In future communication such as 6G, the application function network element may still be the AF network element, or may have another name. This is not limited in this application.

The policy control network element is a control plane function provided by the operator, and includes a user subscription data management function, a policy control function, a charging policy control function, QoS control, and the like. In 5G, the policy control network element may be the PCF network element. In future communication such as 6G, the policy control network element may still be the PCF network element, or may have another name. This is not limited in this application.

The network repository function network element may be configured to: provide a network element discovery function, and provide, based on a request of another network element, network element information corresponding to a network element type. The network repository function network element further provides a network element management service, for example, network element registration, update, and de-registration, and network element status subscription and push. In 5G, the network repository function network element may be the NRF network element. In future communication such as 6G, the network repository function network element may still be the NRF network element, or may have another name. This is not limited in this application.

The DN is a network located outside the operator network. The operator network may access a plurality of DNs, and a plurality of services may be deployed on the DN, to provide services such as data and/or a voice for the terminal device. For example, the DN is a private network of a smart factory, a sensor installed in a workshop of the smart factory may be a terminal device, a control server of the sensor is deployed in the DN, and the control server may provide a service for the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like in the internal office network of the company.

Npcf, Nudr, Nudm, Naf, Namf, and Nsmf in FIG. 1 are service-oriented interfaces provided by the PCF network element, the UDR network element, the UDM network element, the AF network element, the AMF network element, and the SMF network element, and are configured to invoke corresponding service-oriented operations. N1, N2, N3, N4, and N6 are interface sequence numbers. Meanings of these interface sequence numbers are as follows.
(1) N1 is an interface between the AMF network element and the UE, and may be configured to transfer non-access stratum (non-access stratum, NAS) signaling (for example, including a QoS rule from the AMF network element) to the UE, and the like.
(2) N2 is an interface between the AMF network element and the radio access network device, and may be configured to transfer radio bearer control information from a core network side to the radio access network device, and the like.
(3) N3 is an interface between the radio access network device and the UPF network element, and is mainly configured to transfer uplink user plane data and/or downlink user plane data between the radio access network device and the UPF network element.
(4) N4 is an interface between the SMF network element and the UPF network element, and may be configured to transfer information between a control plane and a user plane, including delivery of a forwarding rule, a QoS rule, a traffic statistics rule, and the like from the control plane to the user plane and reporting of user plane information.
(5) N6 is an interface between the UPF network element and the DN, and is configured to transfer an uplink user data flow and/or a downlink user data flow between the UPF network element and the DN.

It may be understood that the foregoing network elements or functions may be network elements in a hardware device, or may be software functions that are run on dedicated hardware, or may be instantiated virtualization functions on a platform (for example, a cloud platform). Optionally, the network elements or functions may be implemented by one device, or may be jointly implemented by a plurality of devices, or may be a function module in one device. This is not specifically limited in embodiments of this application.

In embodiments of this application, an example in which a PCF network element, an SMF network element, an AMF network element, and a UDM network element are respectively a policy control network element, a session management network element, a mobility management network element, and a unified data management network element is used for description, and the PCF network element, the SMF network element, the AMF network element, and the UDM network element are respectively referred to as a PCF, an SMF, an AMF, and UDM for short.

To help understand content of this application, nouns, terms, and the like in this application are described below.

### 1. 5th generation mobile communication system (the 5th generation system, 5GS)

A 5GS features high bandwidth, high reliability, and low latency. With development of satellite communication technologies, a bandwidth capacity of a communication satellite is greatly increased, and costs are reduced. Integration of a satellite network and a 5G network is emerging, and a robust coverage capability of the 5G network supporting satellite access can help the 5G network cover remote areas with sparse populations and areas that are difficult to reach by a ground network, such as an ocean and an island.

### 2. Integration of satellite communication and a 5GS

The 3GPP considers using a satellite as a radio frequency module of an access network device to provide a transparent forwarding capability. In addition, the 3GPP also considers satellite-supported data processing, that is, considers that the satellite provides a non-transparent forwarding capability (or referred to as a regenerative capability). Specifically, the 3GPP considers deploying the access network device on the satellite, or deploying the access network device and a UPF on the satellite. In this application, for a satellite having a regenerative capability, it is considered that an on-board access network device is deployed on the satellite, or both an on-board access network device and an on-board UPF are deployed on the satellite, and a terminal device may access a 5G core network by using the on-board access network device. An on-board access network device is also referred to as an on-board RAN, an access network device on a satellite, an access network device deployed on a satellite, or the like. For ease of description, it is collectively referred to as an on-board access network device in this application. An on-board UPF is also referred to as a UPF on a satellite, a UPF deployed on a satellite, or the like. For ease of description, it is collectively referred to as an on-board UPF in this application.

FIG. 2(a) is a diagram of a satellite access scenario in which an on-board access network device is deployed on a satellite. An access network device is deployed on a satellite, and the access network device is also referred to as an on-board access network device. The on-board access network device has a data processing capability and a data store-and-forward capability.

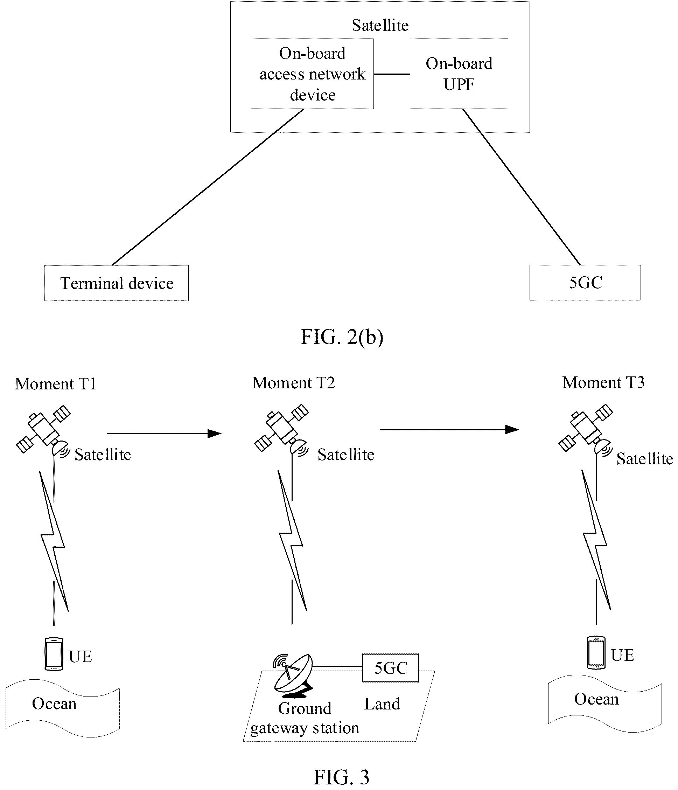

FIG. 2(b) is a diagram of a satellite access scenario in which an on-board access network device and an on-board UPF are deployed on a satellite. An access network device and a UPF are deployed on a satellite. The access network device is also referred to as an on-board access network device, and the UPF is also referred to as an on-board UPF. The on-board access network device has a data processing capability and a data store-and-forward capability, and the on-board UPF has a data store-and-forward capability.

### 3. Satellite discontinuous coverage

Due to movement of a non-geostationary satellite like an MEO and an LEO relative to the ground, for a single satellite, or a plurality of satellites without inter-satellite link networking, or a few constellations with sparse inter-satellite links, discontinuous coverage occurs when a terminal device uses the satellite for access.

In a current discontinuous coverage scenario discussed by the 3GPP, by default, when a terminal device can be covered by a satellite, the satellite can also establish a connection (namely, a feeder link) to a ground gateway station. However, in an actual case, a terminal device may be located in an area like a sea surface, an island, or a polar area. When the terminal device is covered by a satellite, the satellite cannot establish a connection to a ground gateway station. In this case, the conventional technology cannot support communication in this scenario. FIG. 3 is a diagram of a satellite discontinuous coverage scenario. At a moment T1, a satellite is located above an ocean and can cover a terminal device, but the satellite cannot establish a connection to a 5GC on land by using a ground gateway station. At a moment T2, the satellite moves above the land and can access the 5GC by using the ground gateway station, but the satellite cannot establish communication with the terminal device on the ocean. At a moment T3, the satellite covers the terminal device on the ocean again, and in this case, the satellite can communicate with the terminal device, but the satellite cannot establish the connection to the 5GC on land by using the ground gateway station. Therefore, in this scenario, the satellite cannot communicate with the terminal device and the 5GC at the same time. If the terminal device needs to receive and send data, the satellite needs to support a store-and-forward function. For example, an access network device is deployed on the satellite, and the access network device supports buffering of uplink and downlink data, or an access network device and a UPF are deployed, and the UPF supports buffering of uplink and downlink data, to implement delay and interruption tolerance.

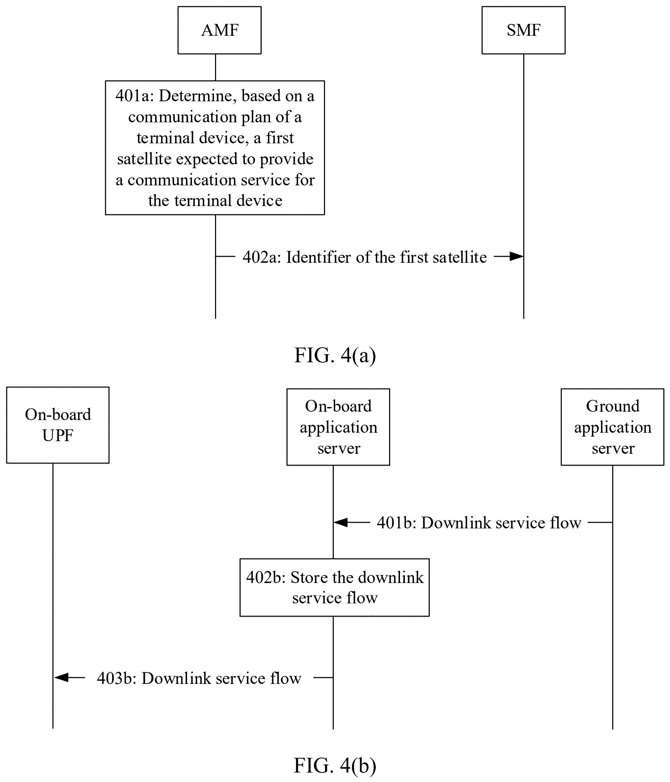

FIG. 4(a) is a schematic flowchart of a communication method according to an embodiment of this application. The method is applied to a satellite discontinuous coverage scenario, and a satellite cannot establish connections to a terminal device and a 5GC at the same time. The method includes the following steps.

Step 401a: An AMF determines, based on a communication plan of the terminal device, a first satellite expected to provide a communication service for the terminal device.

In an implementation method, the communication plan may be determined through negotiation between the terminal device and a ground application server. For example, when the terminal device is on land, the terminal device performs registration and establishes a PDU session by using a ground network. Alternatively, if a satellite can establish connections to the terminal device and a 5GC at the same time, when the terminal device is on land, the terminal device may also perform registration and establish a PDU session by using the satellite. After completing the registration and establishment of the PDU session, the terminal device negotiates with the ground application server to obtain the communication plan. For example, the communication plan is determined based on satellite coverage information, feeder link information, and a communication requirement of the terminal device.

The satellite coverage information may indicate a satellite coverage status. For example, when the satellite coverage information includes coverage time and a coverage area, the satellite coverage information may indicate that the coverage area is covered by a satellite within the coverage time. For another example, when the satellite coverage information includes coverage time, a coverage area, and an identifier of a satellite, the satellite coverage information may indicate that the coverage area is covered, within the coverage time, by the satellite indicated by the identifier of the satellite.

The feeder link information may indicate availability of a feeder link of a satellite. For example, when the feeder link information includes an identifier of the satellite, and includes available time and/or an available area, the feeder link information indicates that the satellite can establish a feeder link in the available time and/or the available area.

The communication requirement of the terminal device includes but is not limited to at least one of the following information: time at which the terminal device uses a satellite communication service, a location at which the terminal device uses a satellite communication service, a delay requirement of a service of the terminal device, or a bandwidth requirement of a service of the terminal device.

The communication plan may indicate a manner in which the terminal device obtains the satellite communication service.

In an implementation method, the communication plan includes an identifier of at least one satellite expected to be used. For example, the communication plan further includes communication time information separately corresponding to the at least one satellite expected to be used, and communication time information corresponding to each satellite expected to be used indicates time at which the terminal device expects to use satellite communication. For example, if the at least one satellite expected to be used includes the first satellite, communication time information corresponding to the first satellite indicates time in which the terminal device expects to use the first satellite for communication.

In still another implementation method, the communication plan includes at least two groups of service information, the at least two groups of service information include a first group of service information and a second group of service information, the first group of service information includes first communication location information and first communication time information, the first communication location information indicates a first location at which the terminal device expects to use satellite communication, the first communication time information indicates first time in which the terminal device expects to use satellite communication at the first location, the second group of service information includes second communication location information and second communication time information, the second communication location information indicates a second location at which the terminal device expects to use satellite communication, the second communication time information indicates second time at which the terminal device expects to use satellite communication at the second location, and the second time is different from the first time. The first location may be the same as or different from the second location. For example, the first communication time information includes at least two of first start time, first communication duration, or first end time; and the second communication time information includes at least two of second start time, second communication duration, or second end time. For example, the two groups of service information further include a third group of service information, a fourth group of service information, and the like. Specific meanings of the third group of service information and the fourth group of service information are similar to those of the first group of service information and the second group of service information. Details are not described again. For example, the communication plan includes five groups of service information. An i^{th} group of service information includes communication location information i and communication time information i, the communication location information i indicates a location i at which the terminal device expects to use satellite communication, and the communication time information i indicates time i at which the terminal device expects to use satellite communication at the location i, where i=1, 2, 3, 4, and 5. The location 1, the location 2, the location 3, the location 4, and the location 5 are consecutive locations in a movement trajectory, or two or more adjacent locations may be a same location. The time 1, the time 2, the time 3, the time 4, and the time 5 are consecutive in a time sequence.

If the communication plan includes the at least two groups of service information, identifiers of at least two satellites expected to be used may be determined based on the two groups of service information.

A specific implementation method for determining the communication plan based on the satellite coverage information, the feeder link information, and the communication requirement of the terminal device is not limited in embodiments of this application.

For example, information about a candidate satellite may be first determined based on the communication requirement of the terminal device and the satellite coverage information, and then the communication plan is determined based on the information about the candidate satellite and the feeder link information. The information about the candidate satellite includes at least one of the following information: an identifier of the candidate satellite, coverage time of the candidate satellite, or a coverage area of the candidate satellite.

For another example, information about a candidate satellite may be first determined based on the feeder link information and the satellite coverage information, and then the communication plan is determined based on the information about the candidate satellite and the communication requirement of the terminal device. The information about the candidate satellite includes at least one of the following information: an identifier of the candidate satellite, coverage time of the candidate satellite, or a coverage area of the candidate satellite.

In embodiments of this application, the service information may also be referred to as expected satellite usage information, expected satellite requirement information, expected communication requirement information, or the like.

In embodiments of this application, the identifier of the satellite may be an ID of the satellite, or may be a data network access identifier (data network access identifier, DNAI) corresponding to the satellite.

In embodiments of this application, the communication plan is also referred to as a connection plan, a contact plan, a delay/interruption-tolerant communication plan, or the like.

In an implementation method, the AMF may receive the communication plan of the terminal device from the terminal device, the ground application server, or a network management device. The network management device may be an operation, administration and maintenance (operation, administration and management, OAM) device, or the like.

Step 402a: The AMF sends an identifier of the first satellite to an SMF.

Correspondingly, the SMF receives the identifier of the first satellite.

Further, after receiving the identifier of the first satellite, the SMF may select an on-board UPF on the satellite based on the identifier of the first satellite.

In the foregoing solution, in the scenario in which the satellite cannot be connected to the terminal device and a core network at the same time, the AMF selects, for the terminal device based on the communication plan of the terminal device, the first satellite that provides a service, and sends the identifier of the first satellite to the SMF; and the SMF selects, for the terminal device based on the identifier of the first satellite, the on-board UPF that provides a service for the terminal device. This implements correct communication of the terminal device.

In an implementation method, the AMF may further send indication information to the SMF, where the indication information is used to trigger selection of the on-board UPF that provides the service for the terminal device. Therefore, after the SMF receives the indication information, the SMF is triggered to select the on-board UPF based on the identifier of the first satellite.

In an implementation method, the SMF further receives session management subscription information of a first session of the terminal device from UDM, where the session management subscription information includes a DNN, and a data network corresponding to the DNN is used to provide an on-satellite store-and-forward service; and the SMF selects the on-board UPF based on the DNN and the identifier of the first satellite. For example, the session management subscription information further includes a store-and-forward indication, the store-and-forward indication indicates that the data network corresponding to the DNN is used to provide the on-satellite store-and-forward service, and the store-and-forward indication is used to trigger the SMF to select the on-board UPF, to be specific, trigger the SMF to select the on-board UPF based on the DNN and the identifier of the first satellite.

In an implementation method, the SMF further receives traffic description information from the ground application server, and then the SMF generates a forwarding rule and sends the forwarding rule to the on-board UPF, where the forwarding rule is used by the on-board UPF to forward, to the on-board application server, an uplink service flow that matches the traffic description information. For example, if the traffic description information includes a DNAI, the SMF may further refer to the DNAI when selecting the on-board UPF. For example, the SMF selects the on-board UPF based on the identifier of the first satellite and the DNAI, or selects the on-board UPF based on the identifier of the first satellite, the DNAI, and the DNN.

In an implementation method, the AMF receives store-and-forward subscription data of the terminal device from UDM, where the store-and-forward subscription data indicates that the terminal device has subscribed to a store-and-forward service; and the AMF sends the indication information to the SMF based on the store-and-forward subscription data. To be specific, after determining that the terminal device has subscribed to the store-and-forward service, the AMF sends, to the SMF, the indication information used to trigger selection of the on-board UPF that provides the service for the terminal device.

In still another implementation method, the AMF receives a session establishment request from the terminal device and a data network name (data network name, DNN) DNN requested by the terminal device, where the session establishment request is used to request to establish a session, and a data network corresponding to the DNN is used to provide an on-satellite store-and-forward service; and the AMF sends the indication information to the SMF based on the DNN. To be specific, when determining that a session that the terminal device requests to establish needs to use the on-satellite store-and-forward service, the AMF sends, to the SMF, the indication information used to trigger selection of the on-board UPF that provides the service for the terminal device.

In an implementation method, the AMF may further send an access stratum context of the terminal device to the first satellite, where the access stratum context is used to establish a connection between the first satellite and the terminal device. Therefore, the first satellite can quickly establish the connection to the terminal device based on the access stratum context, thereby improving communication efficiency.

FIG. 4(b) is a schematic flowchart of a communication method according to an embodiment of this application. The method is applied to a satellite discontinuous coverage scenario, and a satellite cannot establish connections to a terminal device and a 5GC at the same time. The method includes the following steps.

Step 401b: A ground application server sends a downlink service flow of the terminal device to an on-board application server.

The downlink service flow is also referred to as downlink service data or downlink data.

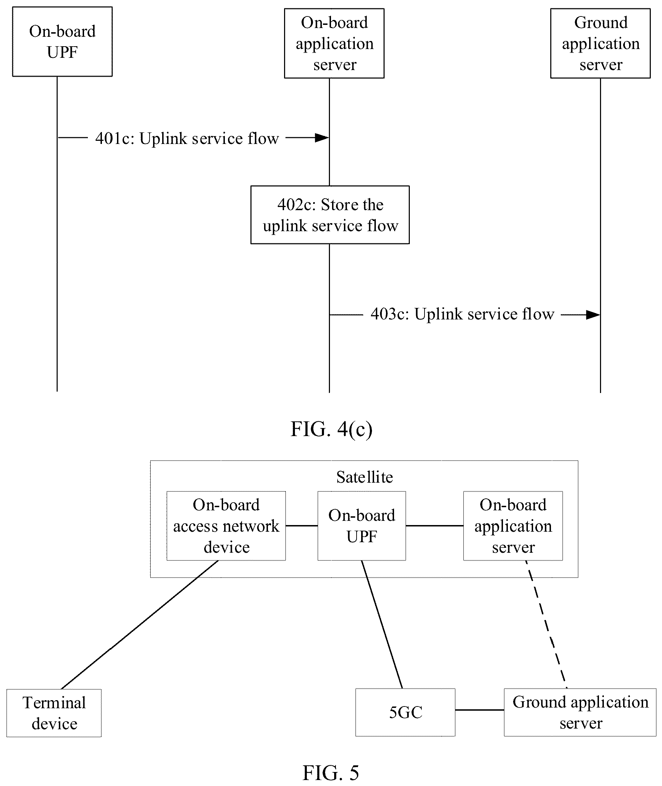

FIG. 5 is an example diagram of satellite communication. The on-board application server is deployed on the satellite. The on-board application server may be, for example, an edge application server (edge application server, EAS), an N6 local area network service functional entity, or another service functional entity. The on-board application server may be connected to an on-board UPF through an N6 interface. The ground application server is connected to a ground UPF of a ground 5GC through an N6 interface. The ground application server interworks with the on-board application server by using a data network external to the 3GPP. A data network after the N6 interface on the satellite can interwork with a data network after the terrestrial N6 interface when a connection can be established between the satellite and a ground gateway station. Due to movement of the satellite, the satellite cannot establish the connections to the terminal device and the ground 5GC at the same time. Therefore, the satellite needs to store and forward data. In embodiments of this application, the on-board application server on the satellite performs a store-and-forward service on communication data between the terminal device and the ground application server.

The on-board application server is also referred to as an on-satellite application server, an application server on a satellite, an on-satellite AF, or the like. The ground application server is also referred to as an application server, a ground AF, an AF, or the like.

Step 402b: The on-board application server stores the downlink service flow.

Step 403b: The on-board application server sends the stored downlink service flow to the on-board UPF after receiving an uplink service flow from the terminal device or within satellite communication time of the terminal device.

If the on-board application server receives the uplink service flow from the terminal device, it indicates that a communication connection is established between the terminal device and the satellite. Therefore, after receiving the uplink service flow from the terminal device, the on-board application server may send the stored downlink service flow to the on-board UPF, and then the on-board UPF sends the downlink service flow to the terminal device.

The satellite communication time of the terminal device may be understood as time in which the terminal device can establish communication with the satellite. Within the satellite communication time, the on-board application server sends the stored downlink service flow to the on-board UPF, and then the on-board UPF sends the downlink service flow to the terminal device.

Specifically, the satellite communication time may indicate time at which the terminal device communicates with the satellite in which the on-board application server is located. For example, the satellite communication time may include at least two of start time, communication duration, or end time.

It should be noted that the on-board UPF may send the downlink service flow to the terminal device according to a forwarding rule. For example, the on-board UPF receives the forwarding rule from an SMF, and the forwarding rule is used by the on-board UPF to send the downlink service flow of the terminal device to the terminal device.

In the foregoing solution, in the scenario in which the satellite cannot be connected to the terminal device and a core network at the same time, the on-board application server in the 3GPP external network stores and forwards the downlink service flow that needs to be sent to the terminal device, thereby implementing correct communication of the terminal device. In addition, because a 3GPP network does not need to store the downlink service flow, pressure of the 3GPP network can be reduced.

FIG. 4(c) is a schematic flowchart of a communication method according to an embodiment of this application. The method is applied to a satellite discontinuous coverage scenario, and a satellite cannot establish connections to a terminal device and a 5GC at the same time. The method includes the following steps.

Step 401c: An on-board UPF sends an uplink service flow of the terminal device to an on-board application server. Correspondingly, the on-board application server receives the uplink service flow of the terminal device.

The uplink service flow is also referred to as uplink service data or uplink data.

In an implementation method, that the on-board application server receives the uplink service flow of the terminal device may be specifically that the terminal device sends the uplink service flow of the terminal device to an on-board access network device, the on-board access network device sends the uplink service flow to the on-board UPF, and then the on-board UPF sends the uplink service flow to the on-board application server.

In an implementation method, before receiving the uplink service flow of the terminal device, the on-board UPF may receive a forwarding rule from an SMF. The forwarding rule is used by the on-board UPF to send the uplink service flow of the terminal device to the on-board application server. Therefore, after receiving the uplink service flow, the on-board UPF sends the uplink service flow to the on-board application server according to the forwarding rule.

Step 402c: The on-board application server stores the uplink service flow.

Step 403c: When the on-board application server successfully establishes a connection to a ground application server, the on-board application server sends the stored uplink service flow to the ground application server. Correspondingly, the ground application server receives the uplink service flow.

In the foregoing method, in the scenario in which the satellite cannot be connected to the terminal device and a core network at the same time, the on-board application server in a 3GPP external network stores and forwards the uplink service flow to be sent to the terminal device, thereby implementing correct communication of the terminal device. In addition, because a 3GPP network does not need to store the uplink service flow, pressure of the 3GPP network can be greatly reduced.

It should be noted that any two or three of embodiments in FIG. 4(a) to FIG. 4(c) may be implemented in combination with each other. This is not limited in this application.

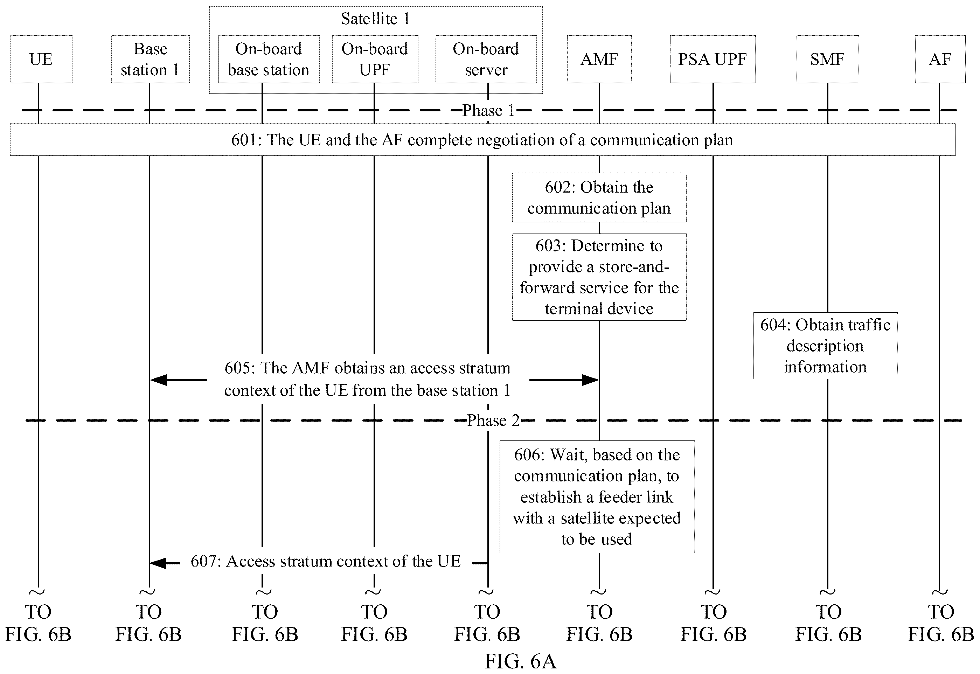

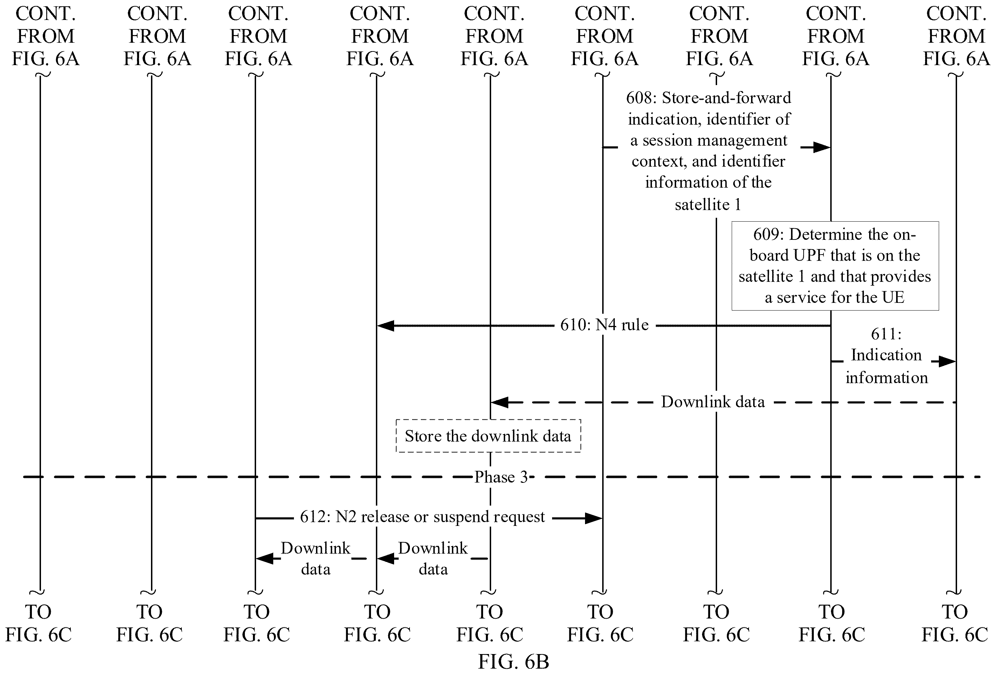

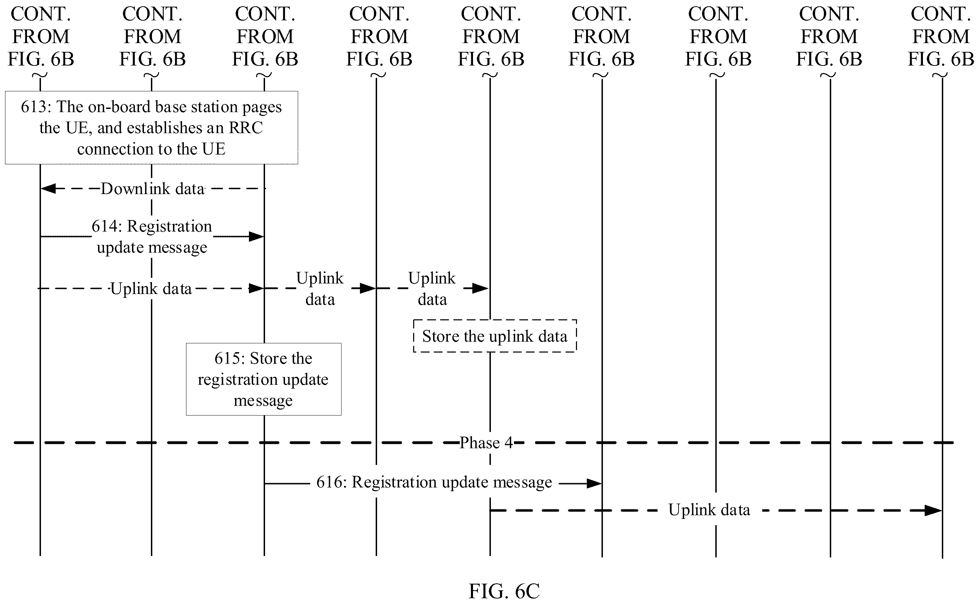

FIG. 6A to FIG. 6C are a schematic flowchart of a communication method according to an embodiment of this application. The embodiment in FIG. 6A to FIG. 6C is a specific example obtained when embodiments in FIG. 4(a) to FIG. 4(c) are combined. In the embodiment in FIG. 6A to FIG. 6C, an example in which a base station and UE are respectively used as an access network device and a terminal device is used for description. The method includes the following steps.

Phase 1: The UE on land accesses a 5GC by using a base station 1, and completes registration and session establishment; and the UE and an AF complete negotiation on a communication plan, and send the communication plan to the 5GC.

Phase 1 relates to the following steps 601 to 605.

Step 601: The UE and the AF complete negotiation of the communication plan.

The AF herein is a third-party application server on the ground, and may be referred to as a ground application server.

The base station 1 shown in the figure may be a ground base station, or may be an on-board base station on a satellite.

For a meaning and an implementation method of the communication plan, refer to the description in the foregoing embodiment.

Step 602: An AMF obtains the communication plan.

In an implementation method, the UE sends the communication plan to the AMF. Optionally, the UE further sends, to the AMF, an identifier of UE corresponding to the communication plan. The UE may be the UE that negotiates the communication plan with the AF, or may be other UE. To be specific, the UE may negotiate the communication plan for the UE, or may negotiate the communication plan for one or more other UE.

In another implementation method, the AF sends the communication plan to the AMF. Specifically, the AF may directly send the communication plan to the AMF, or the AF may send the communication plan to a PCF and then the PCF sends the communication plan to the AMF, or the AF sends the communication plan to the AMF by using an NEF and a PCF. In addition, the AF further sends an identifier of UE to the AMF. The UE may be the UE that negotiates the communication plan with the AF, or may be other UE. To be specific, the UE may negotiate the communication plan for the UE, or may negotiate the communication plan for other UE. In addition, when sending the communication plan to the AMF, the AF may further send a store-and-forward requirement indication to the AMF, to indicate that UE corresponding to the communication plan has a store-and-forward requirement.

In still another implementation method, the AMF may obtain satellite coverage information, feeder link information, and a communication requirement of the UE from an OAM device, the UE, or the AF, and determine the communication plan based on the satellite coverage information, the feeder link information, and the communication requirement of the UE.

In yet another implementation method, the AMF obtains the communication plan from an OAM system.

Step 603: The AMF determines to provide a store-and-forward service for the terminal device.

In an implementation method, when the UE registers, the AMF obtains store-and-forward subscription information of the UE from UDM, and the AMF determines, based on the store-and-forward subscription information, to provide the store-and-forward service for the terminal device.

In another implementation method, when the UE establishes a PDU session, an SMF obtains session management subscription information from UDM, where the session management subscription information includes a store-and-forward indication. The SMF sends the session management subscription information to the AMF. The AMF stores the session management subscription information in a session context of the UE. The AMF determines, based on the store-and-forward indication in the session management subscription information, to provide the store-and-forward service for the terminal device.

Step 604: The SMF obtains traffic description information.

The traffic description information may include an IP address of the AF, and a port number and a protocol number of the AF. For example, the traffic description information further includes an IP address of the UE and a port number of the UE.

Alternatively, the traffic description information may include an application identifier.

In an implementation method, the SMF may obtain the traffic description information from the AF. For example, the AF sends the traffic description information to an NEF, the NEF sends the traffic description information to a PCF, and then the PCF sends the traffic description information to the SMF. For another example, the AF sends the traffic description information to a PCF, and then the PCF sends the traffic description information to the SMF.

During specific implementation, when sending the traffic description information to the SMF, the AF may further send other information to the SMF. Cases are described below.

Case 1: The AF sends an identifier of the UE, a DNAI, and the traffic description information to a PCF. The PCF determines the SMF corresponding to the identifier of the UE, and then sends the DNAI and the traffic description information to the SMF. The SMF determines a packet detection rule (packet detection rule, PDR) based on the traffic description information, determines a forwarding action rule (forwarding action rule, FAR) based on the DNAI, and then sends an N4 rule to a UPF. The N4 rule includes the PDR and the FAR, the PDR is used to identify a service flow, and the FAR indicates a manner of processing a service flow, for example, discarding or forwarding.

Case 2: The AF sends an identifier of the UE, a DNAI, the traffic description information, and an N6 traffic routing request to a PCF. The PCF maps the N6 traffic routing request to a traffic steering path (traffic steering path, TSP) ID, determines the SMF corresponding to the identifier of the UE, and then sends the DNAI, the traffic description information, and the TSP ID to the SMF. The SMF determines a PDR based on the traffic description information, and determines an FAR based on the TSP ID and the DNAI. For example, the FAR includes a forwarding policy ID corresponding to the TSP ID. Then the SMF sends an N4 rule to a UPF. The N4 rule includes the PDR and the FAR, the PDR is used to identify a service flow, and the FAR indicates a manner of processing a service flow, for example, discarding or forwarding.

Case 3: The AF sends an identifier of the UE, a DNAI, the traffic description information, and a service function chain (service function chain, SFC) ID to a PCF. The PCF maps the SFC ID to an uplink TSP ID and a downlink TSP ID, determines the SMF corresponding to the identifier of the UE, and then sends the DNAI, the traffic description information, the uplink TSP ID, and the downlink TSP ID to the SMF. The SMF determines a PDR based on the traffic description information, and determines an FAR based on the DNAI, the uplink TSP ID, and the downlink TSP ID. For example, the FAR includes a forwarding policy ID corresponding to the uplink TSP ID or the downlink TSP ID. Then the SMF sends an N4 rule to a UPF. The N4 rule includes the PDR and the FAR, the PDR is used to identify a service flow, and the FAR indicates a manner of processing a service flow, for example, discarding or forwarding.

For the foregoing Cases 1 to 3, in an implementation method, a source address in the PDR in an uplink direction is the IP address of the UE, and a destination address is a wildcard; and a source address in the PDR in a downlink direction is the wildcard, and a destination address is the IP address of the UE. In another implementation method, a source address in the PDR in an uplink direction is the IP address of the UE, and a destination address is an address in the traffic description information; and a source address in the PDR in a downlink direction is the address in the traffic description information, and a destination address is the IP address of the UE. In another implementation method, the PDR in an uplink direction includes the application identifier.

For specific content of the N4 rule, refer to the description in 604.

It should be noted that, in embodiments of this application, the N4 rule is used as an example for description. The N4 rule also has another name, for example, may be referred to as a forwarding rule. This is not limited.

Step 605: The AMF obtains an access stratum context of the UE from the base station 1.

The AMF may further associate the access stratum context of the UE with the identifier of the UE.

In an implementation method, the AMF obtains the access stratum context of the UE from the base station 1 based on an identifier of a satellite or communication location information in the communication plan, and stores the access stratum context. For example, if the AMF determines, based on the identifier of the satellite or the communication location information in the communication plan, that the UE is to use a communication service of the satellite, the AMF obtains the access stratum context of the UE from the base station 1, and stores the access stratum context, so that the AMF provides the access stratum context of the UE for the satellite when the UE uses the communication service of the satellite, to quickly establish a connection between the satellite and the UE.

In another implementation method, after the AMF determines to provide the store-and-forward service for the terminal device, the AMF obtains the access stratum context of the UE from the base station 1, and stores the access stratum context, so that the AMF provides the access stratum context of the UE for the satellite when the UE uses the communication service of the satellite, to quickly establish a connection between the satellite and the UE.

Phase 2: The UE moves, for example, enters an RRC inactive state, or enters an area in which a satellite cannot establish a feeder, like an ocean or a remote area. A satellite 1 can cover a location of the UE, and there is no feeder link between the satellite 1 and a ground 5GC. The 5GC waits, based on information such as the communication plan, to establish the feeder link with the satellite 1, completes enabling of an on-satellite store-and-forward related configuration, and may store downlink data that needs to be sent to the UE by a ground data network.

Phase 2 relates to the following steps 606 to 611.

Step 606: The AMF waits, based on the communication plan, to establish a feeder link with a satellite expected to be used.

In an implementation method, when the communication plan includes identifiers of one or more satellites expected to be used, the AMF sequentially waits, in a sequence, to establish feeder links with the one or more satellites expected to be used.

In another implementation method, when the communication plan includes one or more groups of service information, the AMF determines, based on the one or more groups of service information and satellite ephemeris information, one or more satellites expected to be used, and then sequentially waits, in a sequence, to establish feeder links with the one or more satellites expected to be used.

If a feeder link is established between the AMF and an on-board base station on the satellite, an N2 connection may be established between the AMF and the on-board base station.

In an implementation method, after determining to provide the store-and-forward service for the UE, the AMF determines to establish the feeder link with the satellite expected to be used.

Step 607: The AMF sends the access stratum context of the UE to the on-board base station on the satellite 1.

At a moment, the AMF establishes a feeder link with the satellite 1, and the N2 connection is established between the AMF and the on-board base station on the satellite 1. The AMF obtains an identifier of the on-board base station on the satellite 1 through mapping based on the identifier of the satellite 1, and sends, to the on-board base station, the access stratum context of the UE that is stored in the AMF.

In an implementation method, when the communication plan includes communication time of the UE, the AMF may determine, based on the communication time, an occasion for sending the access stratum context of the UE to the on-board base station on the satellite 1. For example, during overhead flight, the satellite 1 may establish the feeder link to the ground AMF a plurality of times. However, the AMF does not send the access stratum context of the UE to the on-board base station each time after establishing the feeder link with the on-board base station on the satellite 1. Instead, after the AMF establishes the feeder link with the on-board base station on the satellite 1, if determining that the satellite 1 covers the UE within communication time of the UE, the AMF sends time of an access stratum context of the UF to the satellite-borne base station on the satellite 1. According to the method, a quantity of times that the AMF sends the access stratum context of the UE can be reduced, and signaling overheads can be reduced.

Step 608: The AMF sends the store-and-forward indication, an identifier of a session management context, and identifier information of the satellite 1 to the SMF.

Further, the AMF may determine, based on the identifier of the UE, the SMF that provides the service for the UE.

Step 609: The SMF determines an on-board UPF that is on the satellite 1 and that provides a service for the UE.

Specifically, the SMF may determine, based on the store-and-forward indication, the on-board UPF inserted into the satellite 1, and the on-board UPF that corresponds to the DNAI and that is on the satellite 1. The SMF may obtain the DNAI from the AF, or may determine the DNAI based on the identifier information of the satellite 1.

The on-board UPF may be an uplink classifier (uplink classifier, UL CL), or may be a local protocol data unit session anchor (local PDU session anchor, L-PSA), or may be an integrated function unit of a ULCL and an L-PSA.

Step 610: The SMF sends the N4 rule to the on-board UPF.

The N4 rule may be used to trigger the UPF to forward an uplink service flow of the UE to an on-board application server for storage, and send the stored downlink service flow to the UE. The on-board application server may be an edge application server (edge application server, EAS) deployed on the satellite 1 or another service functional entity (for example, an N6 local area network service functional entity). The on-board application server may communicate with a ground application server (namely, the AF) by using a non-3GPP network.

Step 611: The SMF sends indication information to the AF.

The indication information may indicate an on-board application server that is deployed on the satellite 1. The indication information may be, for example, a DNAI corresponding to the deployed on-board application server.

Further, after receiving the indication information, if there is downlink data to be sent to the terminal device, the AF may send the downlink data to the on-board application server by using a network outside the 3GPP network, and the on-board application server stores the downlink data.

Phase 3: The UE accesses the satellite 1 selected in Phase 2 in the area like the remote area, or the ocean. In this case, the UE may send uplink data for storage on the satellite, and/or receive downlink data stored on the satellite.

This phase relates to the following steps 612 to 615.

Step 612: The satellite 1 moves, causing the feeder link to be disconnected, and the on-board base station sends an N2 release or suspend request to the AMF.

Further, the AMF may trigger the SMF to release or suspend N9 resources of the on-board UPF and the ground PSA UPF. The AMF determines to provide (or deploy) a satellite store-and-forward service for the UE, and does not release a context of the UE.

Step 613: The on-board base station pages the UE, and establishes an RRC connection to the UE.

After establishing the RRC connection to the UE, the on-board base station sends the downlink data to the UE.

Specifically, the on-board application server sends the buffered downlink data of the UE to the on-board UPF, the on-board UPF sends the downlink data to the on-board base station, and then the on-board base station pages the UE, and sends the downlink data to the UE after establishing the connection to the UE.

In another implementation method, the UE may actively establish the RRC connection to the on-board base station on the satellite 1 based on the communication plan.

Step 614: The UE sends a registration update message to the on-board base station.

The registration update message may include a new communication plan, and the new communication plan may indicate an updated manner of providing a satellite communication service for the terminal device.

This step is optional. When updating the communication plan, the UE may send a new communication plan to the on-board base station by initiating a registration update procedure. A specific implementation of the new communication plan is similar to the implementation of the communication plan in the embodiment in FIG. 4(a), and details are not described again.

Step 615: The on-board base station stores the registration update message.

After the UE establishes the RRC connection to the on-board base station on the satellite 1, the UE may further send the uplink data to the on-board base station, and then the on-board base station sends, by using the on-board UPF, the uplink data to the on-board application server for storage.

Phase 4: The satellite 1 re-establishes a feeder. In this case, the uplink data stored on the satellite 1 is sent to the ground data network, or the downlink data that needs to be sent to the UE may be received from the ground data network.

This phase relates to the following step 616.

Step 616: After the satellite 1 establishes the feeder, the on-board base station on the satellite 1 sends the registration update message to the AMF.

The AMF may select, for the UE based on the new communication plan, a satellite that provides a communication service. A specific implementation process is similar to the foregoing process, and details are not described again.

The on-board application server sends the stored uplink data to the AF.

It should be noted that in a next satellite selection process of the AMF, the satellite 1 may still be selected to provide the communication service for the UE, or another satellite, for example, a satellite 2, may be selected to provide the communication service for the UE.

In the foregoing solution, in the scenario in which the satellite cannot be connected to the terminal device and a core network at the same time, the on-board application server in the 3GPP external network stores and forwards the uplink/downlink service flow that needs to be sent to the terminal device, thereby implementing correct communication of the terminal device. In addition, because a 3GPP network does not need to store the uplink/downlink service flow, pressure of the 3GPP network can be reduced. In addition, in the foregoing solution, the communication plan may be selected for a plurality of UE, and the communication plan is sent to the core network. This efficiently completes on-satellite configuration.

It may be understood that, to implement functions in the foregoing embodiments, the mobility management network element, the session management network element, the on-board application server, or the on-board user plane network element includes a corresponding hardware structure and/or software module for performing each function. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

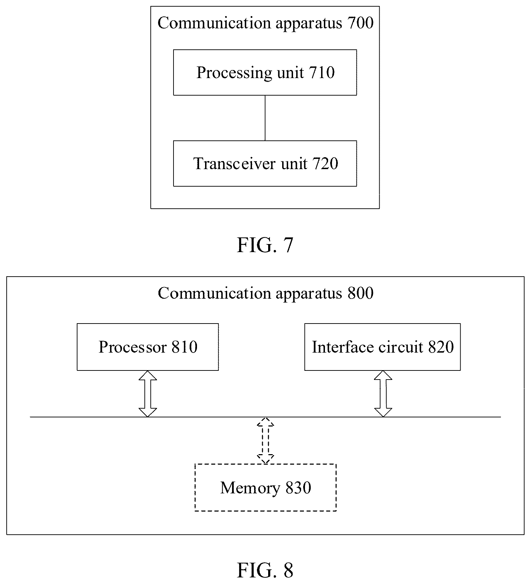

FIG. 7 and FIG. 8 each are a diagram of a possible structure of a communication apparatus according to an embodiment of this application. These communication apparatuses may be configured to implement functions of the mobility management network element, the session management network element, the on-board application server, or the on-board user plane network element in the foregoing method embodiments, and therefore can also implement beneficial effect of the foregoing method embodiments. In embodiments of this application, the communication apparatus may be a mobility management network element, a session management network element, an on-board application server, or an on-board user plane network element, or may be a module (for example, a chip) used in a mobility management network element, a session management network element, an on-board application server, or an on-board user plane network element.

The communication apparatus 700 shown in FIG. 7 includes a processing unit 710 and a transceiver unit 720. The communication apparatus 700 is configured to implement functions of the mobility management network element, the session management network element, the on-board application server, or the on-board user plane network element in any one of the method embodiments shown in FIG. 4(a) to FIG. 4(c) and FIG. 6A to FIG. 6C.

When the communication apparatus 700 is configured to implement the function of the mobility management network element in the foregoing method embodiment, the processing unit 710 is configured to determine, based on a communication plan of a terminal device, a first satellite expected to provide a communication service for the terminal device; and the transceiver unit 720 is configured to send an identifier of the first satellite to a session management network element, where the communication plan includes an identifier of at least one satellite expected to be used; or the communication plan includes at least two groups of service information, the at least two groups of service information include a first group of service information and a second group of service information, the first group of service information includes first communication location information and first communication time information, the first communication location information indicates a first location at which the terminal device expects to use satellite communication, the first communication time information indicates first time in which the terminal device expects to use satellite communication at the first location, the second group of service information includes second communication location information and second communication time information, the second communication location information indicates a second location at which the terminal device expects to use satellite communication, the second communication time information indicates second time at which the terminal device expects to use satellite communication at the second location, and the second time is different from the first time.

In a possible implementation method, the first communication time information includes at least two of first start time, first communication duration, or first end time; and the second communication time information includes at least two of second start time, second communication duration, or second end time.

In a possible implementation method, the first location is different from the second location.

In a possible implementation method, when the communication plan includes the identifier of the at least one satellite expected to be used, the communication plan further includes communication time information separately corresponding to the at least one satellite expected to be used, and communication time information corresponding to the first satellite indicates time in which the terminal device expects to use the first satellite for communication.

In a possible implementation method, the transceiver unit 720 is further configured to receive the communication plan from the terminal device, a ground application server, or a network management device.

In a possible implementation method, the transceiver unit 720 is further configured to send an access stratum context of the terminal device to the first satellite, where the access stratum context is used to establish a connection between the first satellite and the terminal device.

In a possible implementation method, the transceiver unit 720 is further configured to send indication information to the session management network element, where the indication information is used to trigger selection of an on-board user plane network element that provides a service for the terminal device.

In a possible implementation method, the transceiver unit 720 is further configured to receive store-and-forward subscription data of the terminal device from a unified data management network element, where the store-and-forward subscription data indicates that the terminal device has subscribed to a store-and-forward service; and that the transceiver unit 720 is configured to send the indication information to the session management network element specifically includes: The transceiver unit 720 is configured to send the indication information to the session management network element based on the store-and-forward subscription data.

In a possible implementation method, the transceiver unit 720 is further configured to receive a session establishment request from the terminal device and a data network name DNN requested by the terminal device, where the session establishment request is used to request to establish a session, and a data network corresponding to the DNN is used to provide an on-satellite store-and-forward service; and that the transceiver unit 720 is configured to send the indication information to the session management network element specifically includes: The transceiver unit 720 is configured to send the indication information to the session management network element based on the DNN.

When the communication apparatus 700 is configured to implement the function of the session management network element in the foregoing method embodiment, the transceiver unit 720 is configured to receive session management subscription information of a first session of a terminal device from a unified data management network element, where the session management subscription information includes a data network name DNN, and a data network corresponding to the DNN is used to provide an on-satellite store-and-forward service; and the processing unit 710 is configured to select an on-board user plane network element based on the DNN.

In a possible implementation method, the session management subscription information further includes a store-and-forward indication, and the store-and-forward indication indicates that the data network corresponding to the DNN is used to provide the on-satellite store-and-forward service; and that the processing unit 710 is configured to select the on-board user plane network element based on the DNN specifically includes: The processing unit 710 is configured to select the on-board user plane network element based on the DNN and the store-and-forward indication.

In a possible implementation method, the transceiver unit 720 is further configured to: receive traffic description information from a ground application server; and send a forwarding rule to the selected on-board user plane network element, where the forwarding rule is used by the on-board user plane network element to forward, to an on-board application server, an uplink service flow that matches the traffic description information.

In a possible implementation method, the traffic description information includes a DNAI; and the processing unit 710 is further configured to select the on-board user plane network element based on the DNAI.

When the communication apparatus 700 is configured to implement the function of the on-board application server in the foregoing method embodiment, the transceiver unit 720 is configured to receive a downlink service flow of a terminal device from a ground application server; the processing unit 710 is configured to store the downlink service flow; and the transceiver unit 720 is further configured to send the stored downlink service flow to the on-board user plane network element after an uplink service flow from the terminal device is received or within satellite communication time of the terminal device, where the satellite communication time indicates time at which the terminal device uses satellite communication.

In a possible implementation method, the transceiver unit 720 is further configured to receive the satellite communication time of the terminal device.

In a possible implementation method, the satellite communication time information includes at least two of start time, communication duration, or end time.

When the communication apparatus 700 is configured to implement the function of the on-board application server in the foregoing method embodiment, the transceiver unit 720 is configured to receive an uplink service flow from a terminal device of an on-board user plane network element; the processing unit 710 is configured to store the uplink service flow; and the transceiver unit 720 is further configured to: when the on-board application server successfully establishes a connection to a ground application server, send the stored uplink service flow to the ground application server.

In a possible implementation method, the transceiver unit 720 is further configured to: when the on-board application server successfully establishes the connection to the ground application server, receive a downlink service flow of the terminal device from the ground application server; the processing unit 710 is further configured to store the downlink service flow; and the transceiver unit 720 is further configured to send the stored downlink service flow to the on-board user plane network element after an uplink service flow from the terminal device is received or within satellite communication time of the terminal device, where the satellite communication time indicates time at which the terminal device uses satellite communication.

In a possible implementation method, the transceiver unit 720 is further configured to receive the satellite communication time of the terminal device.

In a possible implementation method, the satellite communication time information includes at least two of start time, communication duration, or end time.

When the communication apparatus 700 is configured to implement the function of the on-board user plane network element in the foregoing method embodiment, the transceiver unit 720 is configured to: receive a forwarding rule from a session management network element, where the forwarding rule is used by the on-board user plane network element to forward an uplink service flow of a terminal device to an on-board application server; and receive the uplink service flow from the terminal device; and the processing unit 710 is configured to send the uplink service flow of the terminal device to the on-board application server by using the transceiver unit 720 according to the forwarding rule.

In a possible implementation method, the forwarding rule is further used by the on-board user plane network element to send a downlink service flow to the terminal device; the transceiver unit 720 is further configured to receive the downlink service flow of the terminal device from the on-board application server; and the processing unit 710 is further configured to send the downlink service flow to the terminal device by using the transceiver unit 720 according to the forwarding rule.

For more detailed descriptions of the processing unit 710 and the transceiver unit 720, directly refer to related descriptions in the method embodiments in FIG. 4(a) to FIG. 4(c) and FIG. 6A to FIG. 6C. Details are not described herein again.

The communication apparatus 800 shown in FIG. 8 includes a processor 810. Further, an interface circuit 820 may be included. The processor 810 and the interface circuit 820 are coupled to each other. It may be understood that the interface circuit 820 may be a transceiver or an input/output interface.

Optionally, the communication apparatus 800 further includes a memory 830, configured to store instructions or input data.

The processor 810 may be configured to execute the instructions in the memory 830, to implement actions of related network elements in the method embodiments shown in FIG. 4(a) to FIG. 4(c) and FIG. 6A to FIG. 6C. For example, the processor 810 may read the instructions in the memory 830 through the interface circuit 820. This is not limited.

It should be noted that the communication apparatus 800 may be the device in any one of the methods shown in FIG. 4(a) to FIG. 4(c) and FIG. 6A to FIG. 6C, for example, an on-board UPF, an on-board application server, a ground application server, UE, an AMF, a PSA UPF, an SMF, or an AF, or may be located in the foregoing device, for example, a chip in a device or a system on chip. This is not limited.

When the communication apparatus 800 is configured to implement the function of the related network element in any one of the methods shown in FIG. 4(a) to FIG. 4(c) and FIG. 6A to FIG. 6C, the processor 810 is configured to implement the function of the processing unit 710, and the interface circuit 820 is configured to implement the function of the transceiver unit 720.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

In an implementation method, an embodiment of this application further provides a communication system. The communication system includes an AMF and an SMF. The AMF and the SMF may be configured to implement the operations performed by the AMF and the SMF in the method embodiment shown in FIG. 4(a) or FIG. 6A to FIG. 6C.

In an implementation method, an embodiment of this application further provides a communication system. The communication system includes UDM and an SMF. The UDM and the SMF may be configured to implement the operations performed by the UDM and the SMF in the method embodiment shown in FIG. 4(a) or FIG. 6A to FIG. 6C.

In an implementation method, an embodiment of this application further provides a communication system. The communication system includes an on-board application server and a ground application server. The on-board application server and the ground application server may be configured to implement the operations performed by the on-board application server and the ground application server (or the AF) in the method embodiment shown in FIG. 4(b), FIG. 4(c), or FIG. 6A to FIG. 6C. Further, the communication system further includes an on-board UPF. The on-board UPF is configured to implement the operation performed by the on-board UPF in the method embodiment shown in FIG. 4(b), FIG. 4(c), or FIG. 6A to FIG. 6C.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an access network device or a terminal device. Certainly, the processor and the storage medium may exist in the access network device or the terminal device as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, an access network device, a terminal device, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

In this application, "at least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists. A and B may be singular or plural. In the text descriptions of this application, the character "/" represents an "or" relationship between the associated objects. In a formula in this application, the character "/" represents a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
determining, based on a communication plan of a terminal device, a first satellite expected to provide a communication service for the terminal device; and
sending an identifier of the first satellite to a session management network element, wherein
the communication plan comprises an identifier of at least one satellite expected to be used; or
the communication plan comprises at least two groups of service information, the at least two groups of service information comprise a first group of service information and a second group of service information, the first group of service information comprises first communication location information and first communication time information, the first communication location information indicates a first location at which the terminal device expects to use satellite communication, the first communication time information indicates first time in which the terminal device expects to use satellite communication at the first location, the second group of service information comprises second communication location information and second communication time information, the second communication location information indicates a second location at which the terminal device expects to use satellite communication, the second communication time information indicates second time at which the terminal device expects to use satellite communication at the second location, and the second time is different from the first time.

2. The method according to claim 1, wherein the first communication time information comprises at least two of first start time, first communication duration, or first end time; and
the second communication time information comprises at least two of second start time, second communication duration, or second end time.

3. The method according to claim 1 or 2, wherein the first location is different from the second location.

4. The method according to any one of claims 1 to 3, wherein when the communication plan comprises the identifier of the at least one satellite expected to be used, the communication plan further comprises communication time information separately corresponding to the at least one satellite expected to be used, and communication time information corresponding to the first satellite indicates time in which the terminal device expects to use the first satellite for communication.

5. The method according to any one of claims 1 to 4, wherein the method further comprises:
receiving the communication plan from the terminal device, a ground application server, or a network management device.

6. The method according to any one of claims 1 to 5, wherein the method further comprises:
sending an access stratum context of the terminal device to the first satellite, wherein the access stratum context is used to establish a connection between the first satellite and the terminal device.

7. The method according to any one of claims 1 to 6, wherein the method further comprises:
sending indication information to the session management network element, wherein the indication information is used to trigger selection of an on-board user plane network element that provides a service for the terminal device.

8. The method according to claim 7, wherein the method further comprises:
receiving store-and-forward subscription data of the terminal device from a unified data management network element, wherein the store-and-forward subscription data indicates that the terminal device has subscribed to a store-and-forward service; and
sending the indication information to the session management network element comprises:
sending the indication information to the session management network element based on the store-and-forward subscription data.

9. The method according to claim 7, wherein the method further comprises:
receiving a session establishment request from the terminal device and a data network name DNN requested by the terminal device, wherein the session establishment request is used to request to establish a session, and a data network corresponding to the DNN is used to provide an on-satellite store-and-forward service; and
sending the indication information to the session management network element comprises:
sending the indication information to the session management network element based on the DNN.

10. A communication method, comprising:
receiving session management subscription information of a first session of a terminal device from a unified data management network element, wherein the session management subscription information comprises a data network name DNN, and a data network corresponding to the DNN is used to provide an on-satellite store-and-forward service; and
selecting an on-board user plane network element based on the DNN.

11. The method according to claim 10, wherein the session management subscription information further comprises a store-and-forward indication, and the store-and-forward indication indicates that the data network corresponding to the DNN is used to provide the on-satellite store-and-forward service; and
selecting the on-board user plane network element based on the DNN comprises:
selecting the on-board user plane network element based on the DNN and the store-and-forward indication.

12. The method according to claim 10 or 11, wherein the method further comprises:
receiving traffic description information from a ground application server; and
sending a forwarding rule to the selected on-board user plane network element, wherein the forwarding rule is used by the on-board user plane network element to forward, to an on-board application server, an uplink service flow that matches the traffic description information.

13. The method according to claim 12, wherein the traffic description information comprises a data network access identifier DNAI; and
the method further comprises:
selecting the on-board user plane network element based on the DNAI.

14. A communication method, comprising:
receiving a downlink service flow of a terminal device from a ground application server;
storing the downlink service flow; and
sending the stored downlink service flow to an on-board user plane network element after an uplink service flow from the terminal device is received or within satellite communication time of the terminal device, wherein the satellite communication time indicates time at which the terminal device uses satellite communication.

15. The method according to claim 14, wherein the method further comprises:
receiving the satellite communication time of the terminal device.

16. The method according to claim 14 or 15, wherein the satellite communication time information comprises at least two of start time, communication duration, or end time.

17. A communication method, comprising:
receiving an uplink service flow of a terminal device from an on-board user plane network element;
storing the uplink service flow; and
when an on-board application server successfully establishes a connection to a ground application server, sending the stored uplink service flow to the ground application server.

18. The method according to claim 17, wherein the method further comprises:
when the on-board application server successfully establishes the connection to the ground application server, receiving a downlink service flow of the terminal device from the ground application server;
storing the downlink service flow; and
sending the stored downlink service flow to the on-board user plane network element after an uplink service flow from the terminal device is received or within satellite communication time of the terminal device, wherein the satellite communication time indicates time at which the terminal device uses satellite communication.

19. The method according to claim 18, wherein the method further comprises:
receiving the satellite communication time of the terminal device.

20. The method according to claim 18 or 19, wherein the satellite communication time information comprises at least two of start time, communication duration, or end time.

21. A communication apparatus, comprising a processor and an interface circuit, wherein the processor is configured to: communicate with another apparatus through the interface circuit, and perform the method according to any one of claims 1 to 9, or perform the method according to any one of claims 10 to 13, or perform the method according to any one of claims 14 to 16, or perform the method according to any one of claims 17 to 20.

22. A communication apparatus, comprising a module configured to perform the method according to any one of claims 1 to 9, or the method according to any one of claims 10 to 13, or the method according to any one of claims 14 to 16, or the method according to any one of claims 17 to 20.

23. A communication apparatus, comprising a processor coupled to a memory, wherein the processor is configured to invoke a program stored in the memory, to perform the method according to any one of claims 1 to 9, or perform the method according to any one of claims 10 to 13, or perform the method according to any one of claims 14 to 16, or perform the method according to any one of claims 17 to 20.

24. A communication apparatus, comprising a processor and a memory, wherein the memory is configured to store computer instructions, and when the communication apparatus runs, the processor executes the computer instructions stored in the memory, to perform the method according to any one of claims 1 to 9, or perform the method according to any one of claims 10 to 13, or perform the method according to any one of claims 14 to 16, or perform the method according to any one of claims 17 to 20.

25. A computer-readable storage medium, wherein the storage medium stores a computer program or instructions, and when the computer program or instructions is/are executed by a communication apparatus, the method according to any one of claims 1 to 9 is implemented, or the method according to any one of claims 10 to 13 is implemented, or the method according to any one of claims 14 to 16 is implemented, or the method according to any one of claims 17 to 20 is implemented.

26. A communication system, comprising a session management network element and a mobility management network element configured to perform the method according to any one of claims 1 to 9, wherein
the session management network element is configured to receive an identifier of a first satellite.

27. A communication system, comprising a unified data management network element and a session management network element configured to perform the method according to any one of claims 10 to 13, wherein
the unified data management network element is configured to send session management subscription information of a first session of a terminal device to the session management network element.

28. A communication system, comprising a ground application server and an on-board application server configured to perform the method according to any one of claims 14 to 16, wherein
the ground application server is configured to send a downlink service flow of a terminal device to the on-board application server.

29. A communication system, comprising a ground application server and an on-board application server configured to perform the method according to any one of claims 17 to 20, wherein
the ground application server is configured to receive an uplink service flow of a terminal device from the on-board application server.
